Europäisches Patentamt

European Patent Office

Office européen des brevets

(11) Publication number: **0 420 382 A1**

# EUROPEAN PATENT APPLICATION

(21) Application number: 90305237.1

(51) Int. Cl.⁵: **B64C 21/04**

(22) Date of filing: **15.05.90**

(30) Priority: **26.09.89 JP 247949/89**

(43) Date of publication of application:
**03.04.91 Bulletin 91/14**

(84) Designated Contracting States:
**AT DE FR GB IT NL SE**

(71) Applicant: **AREX ELECTRONICS CORPORATION**
**2-6, 3-chome, Akasaka**
**Minato-ku Tokyo(JP)**

(72) Inventor: **Hatanaka, Takefumi**
**no. 1-4-14, Midori-cho**
**Koganei-shi, Tokyo(JP)**

(74) Representative: **Lawson, David Glynne et al**
**MARKS & CLERK 57-60 Lincoln's Inn Fields**
**London WC2A 3LS(GB)**

(54) **VTOL aircraft utilizing gas flow across wing surfaces for dynamic lift.**

(57) A vertical take-off and landing aircraft (10) has one or more rear-mounted jet engines (20), and one or more jet deflectors (32) shaped for efficiently redirecting the jet flows (52) from the engines (20) to pass over the upper surfaces of the wings (16) of the aircraft (10) when the deflectors (32) are set to an operating position in which they intercept the jet flows (52), thereby producing dynamic lift as a result of a pressure difference between the upper and lower surfaces of the wings.

# VTOL AIRCRAFT UTILIZING GAS FLOW ACROSS WING SURFACES FOR DYNAMIC LIFT

## BACKGROUND OF THE INVENTION

### Field of Applicable Technology

The present invention relates to a vertical take-off and landing (hereinafter abbreviated to VTOL) aircraft, and in particular to a jet engine type of VTOL aircraft.

### Prior Art Technology

In the prior art, the tilt-rotor type of VTOL aircraft is well known, in which engine-driven tiltable rotors are mounted on the aircraft wings. Such an aircraft has the disadvantages of high manufacturing cost, and a limited flying speed. To overcome these disadvantages, proposals have been made for a jet engine type of VTOL aircraft whereby dynamic lift is applied to the aircraft during take-off or landing as a result of directing the high-speed gas flow from the jet engine downwards from the aircraft. However due to the fact that the high-speed jet flow is directly expelled into the atmosphere, the amount of dynamic lift that is thereby applied to the aircraft is necessarily small, so that the efficiency is poor.

## SUMMARY OF THE INVENTION

According to the present invention, there is provided a vertical take-off and landing aircraft comprising a fuselage, main wings attached to said fuselage, at least one jet engine having an ejection aperture disposed adjacent to a rear end of said·fuselage, at least one jet deflection chamber formed adjacent to said ejection aperture, and jet deflector means mounted within said jet deflection chamber, said jet deflector means being selectively operative to deflect a jet flow from said ejection aperture onto respective upper surfaces of said main wings, whereby vertically directed dynamic lift is generated during take-off or landing of said aircraft, by said main wings as a result of deflection of said jet flow.

## BRIEF DESCRIPTION OF THE DRAWINGS

Fig. 1 is an oblique external view of a preferred embodiment of a VTOL aircraft according to the present invention;

Fig. 2 is a partial cut-away view in plan of the aircraft of Fig. 1;

Fig. 3 is an expanded partial oblique view showing a jet deflector in Fig. 2;

Fig. 4 is a partial cut-away view in plan showing a jet deflector in the non-operative position; and

Fig. 5 is a partial cut-away view in plan showing a jet deflector in the operative position.

## DESCRIPTION OF PREFERRED EMBODIMENTS

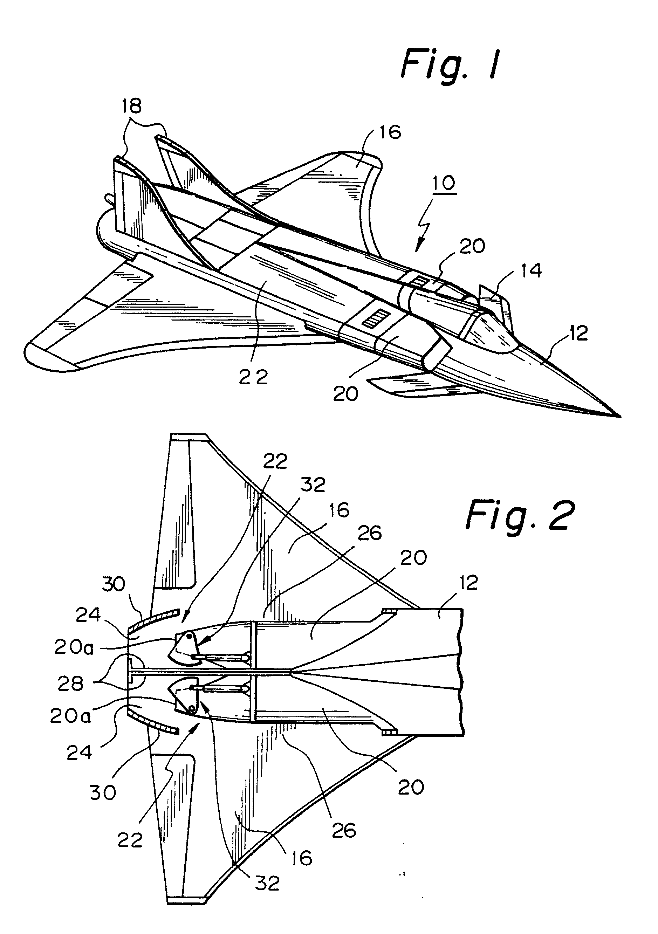

Referring first to Fig. 1, the preferred embodiment of a VTOL aircraft 10 is formed of a fuselage 12, canard wings 14 which are attached to the fuselage 12 near the front end of the fuselage, main wings 16 which in this embodiment are of delta shape and are attached to the fuselage 12 near the rear end thereof, and vertical stabilizers 18 which are oriented perpendicular to the main wings 16. A pair of jet engines 20 are mounted in the fuselage 12, while respective jet deflection chambers 22 are formed adjacent to the ejection apertures 20a of the jet engines 20, at the rear end of the fuselage 12.

As shown in Fig. 2, each of the ejection aperture 20a of each of the jet engines 20 opens into the corresponding jet deflection chamber 22. Each of the jet deflection chambera 22 is formed of a horizontal surface 24 which is substantially coplanar with the main wings 16, a horizontal passage 26 formed on the horizontal surface 24, which opens onto an upper surface of a corresponding one of the main wings 16, for transferring the high-pressure gas flow towards the front of the corresponding main wing 16, a central wall 28 which extends along the longitudonal axis of the fuselage 12 and is oriented vertically with respect to the horizontal surface 24, and a side deflector 30 which extends along the periphery of the horizontal surface 24 and is oriented perpendicular to that surface. In addition, a jet deflector 32 is mounted within each jet deflection chamber 22, for selectively directing the high-pressure gas flow from the jet engine ejection aperture 20a through the corresponding horizontal passage 24 onto the upper surface of a corresponding one of the main wings 16.

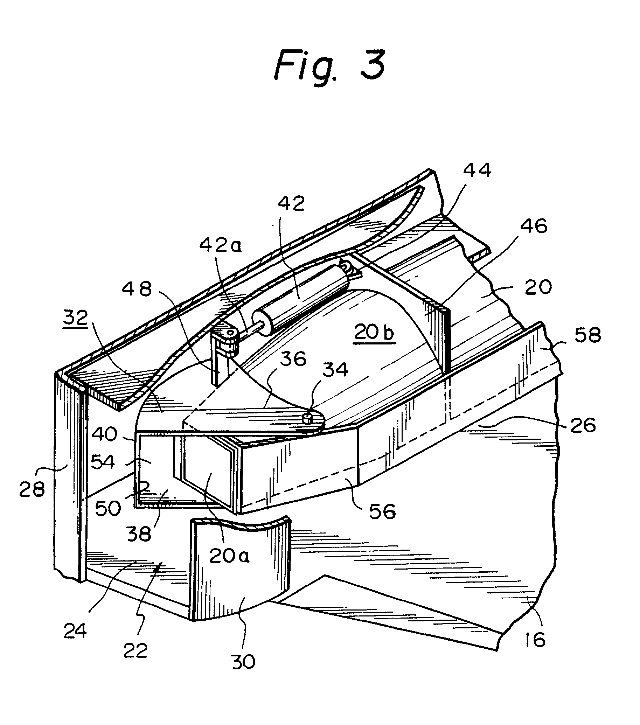

Fig. 3 is a partial oblique cut-away view of one of the jet deflection chambers 22. The following description will be given for the components in only a single jet deflection chamber, however it should be understood that identical operations are executed simultaneously by corresponding components of the other jet deflection chamber. As shown in Fig. 3, each ejection aperture 20a of this embodiment is of rectangular shape, for ease of constructing the jet deflector 32. However it is also possible to utilize a circular or elliptical shape of ejection aperture. A pivot shaft 34 extends vertically upwards from the upper surface of jet engine housing 20b, while a second pivot shaft (not shown in the drawings) extends vertically downwards from the lower surface of the engine housing 20b, coaxial with the pivot shaft 34. A top arm 36 and a bottom arm 38 are respectively rotatably mounted on these pivot shafts, and are mutually linked by an arch-shaped flow deflector plate 40. The flow deflector plate 40 can thus be selectively positioned such as to intercept the jet flow from the ejection aperture 20a or to be out of the path of that jet flow. This positioning of the flow deflector plate 40 is executed by an actuator 42, which in this embodiment is a hydraulic cylinder actuator that is driven by hydraulic pressure, but which could equally well be an electrically driven actuator. The body of the actuator 42 is attached to an end plate 46, and thereby fixedly retained with respect to the fuselage fuselage 12, while a movable rod 32a of the actuator 42 is rotatably linked to a bracket 48 which is attached to and extends upwards from the top arm 36 of the jet deflector 32.

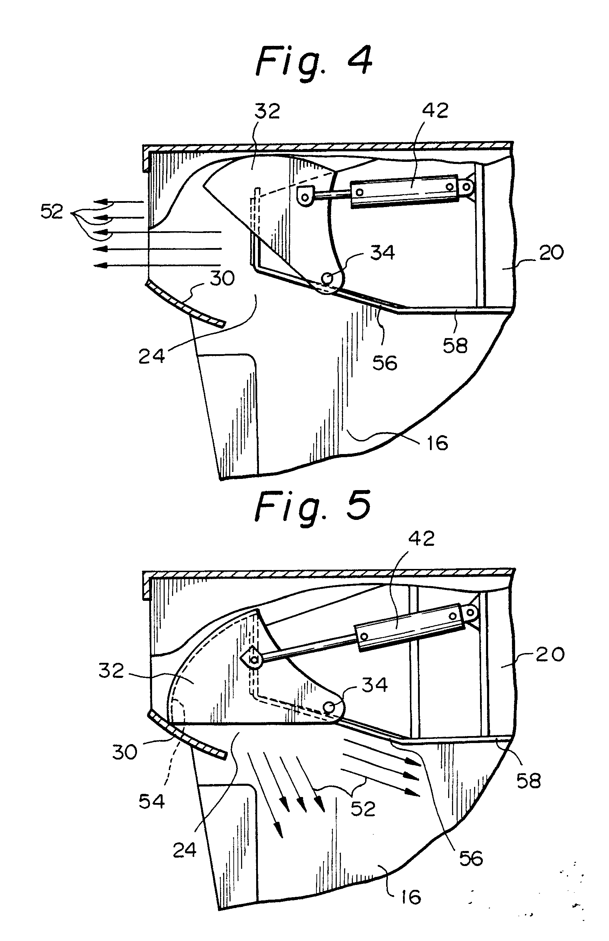

In the condition illustrated in Figs. 3 and 4, the jet deflector 32 is set in a non-operative position thereof by the actuator 42, i.e. the most fully retracted position of the jet deflector 32, wherein an edge 50 of the flow deflector plate 40 is positioned outside the path of the jet flow 52. Since the direction of the jet flow from the ejection aperture 20a is parallel to the longitudonal axis of the fuselage 12 and the flow is directed outward from the rear of the fuselage 12, a forward propulsive force is applied to the aircraft 10.

When the jet deflector 32 is set to its operative position (i.e. the jet deflection position) by the actuator 42 as illustrated in Fig. 5, a guide wall 56 serves to guide the jet flow onto the upper surface of the corresponding main wing 16. A guide wall 58 is an extension of the guide wall 56, and leads towards the front of the fuselage 12. Thus in this condition the jet flow 52 from the ejection aperture 20a is directed by the curved surface 54 of the jet deflector 32 onto the upper surface of the corresponding main wing 16, thereby reducing the pressure upon that upper surface, and so generating dynamic lift by the wing. Take-off or landing of the aircraft by vertical movement can thereby be achieved.

As will be clear from the above, with a VTOL aircraft according to the present invention, the jet flow from the jet engines is directed onto the upper surfaces of the main wings of the aircraft, to flow across these surfaces rather than being directly expelled into the atmosphere, and hence a large pressure difference is produced between the upper and lower surfaces of the wings. A high level of dynamic lift can thereby be obtained, and so the invention will be highly effective in realizing a practical VTOL aircraft.

## Claims

1. A vertical take-off and landing aircraft comprising a fuselage, main wings attached to said fuselage, at least one jet engine having an ejection aperture disposed adjacent to a rear end of said fuselage, at least one jet deflection chamber formed adjacent to said ejection aperture, and jet deflector means mounted within said jet deflection chamber, said jet deflector means being selectively operative to deflect a jet flow from said ejection aperture onto respective upper surfaces of said main wings, whereby vertically directed dynamic lift is generated during take-off or landing of said aircraft, by said main wings as a result of deflection of said jet flow.

2. A vertical take-off and landing aircraft according to claim 1, in which said jet flow is directed outward from said fuselage to the rear thereof when said jet deflector means is set to a non-operative position thereof.

3. A vertical take-off and landing aircraft according to claims 1 or 2, in which said jet deflector means comprise at least one jet deflector movably mounted on pivot means and having a surface shaped to a predetermined shape for deflection of said jet flow, and actuator means operable for selectively moving said jet deflector to said operative position, in which said jet flow is interecepted and re-directed towards said wing upper surfaces by said jet deflector, and to said non-operative position, in which said jet flow is left unimpeded by said jet deflector.

# Fig. 1

# Fig. 2

# Fig. 3

## Fig. 4

## Fig. 5

European
Patent Office

**EUROPEAN SEARCH
REPORT**

Application Number

**EP 90 30 5237**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 360 218   (MILLER)<br>* column 1, line 10 - column 1, line 17 * * column 3, line 35 - column 4, line 51; figures 1, 2 *<br>— — — | 1-3 | B 64 C 21/04 |
| Y | US-A-3 480 234   (CORNISH)<br>* column 1, line 61 - column 1, line 65 * * column 4, line 53 - column 4, line 70 * * column 5, line 4 - column 5, line 50; figures 3-5 *<br>— — — | 1 | |
| Y,A | GB-A-8 007 70   (DE HAVILLAND)<br>* page 1, line 9 - page 1, line 23 * * page 1, line 35 - page 1, line 58 @ page 2, line 99 - page 3, line 56 @ page 4, line 8 - page 4, line 65; figures 1, 2, 9-11 *<br>— — — | 1,2,3 | |
| A | US-A-4 860 976   (MC FADDEN)<br>* column 1, line 8 - column 1, line 11 * * column 4, line 24 - column 4, line 27 * * column 4, line 57 - column 4, line 68; figure 4 *<br>— — — — — | 1 | |
| | | | **TECHNICAL FIELDS SEARCHED (Int. Cl.5)**<br><br>B 64 C<br>F 02 K |

The present search report has been drawn up for all claims

| Place of search | Date of completion of search | Examiner |
|---|---|---|
| The Hague | 14 December 90 | ZERI A. |

CATEGORY OF CITED DOCUMENTS

X : particularly relevant if taken alone
Y : particularly relevant if combined with another
    document of the same catagory
A : technological background
O : non-written disclosure
P : intermediate document
T : theory or principle underlying the invention

E : earlier patent document, but published on, or after
    the filing date
D : document cited in the application
L : document cited for other reasons

&: member of the same patent family, corresponding
    document